# EUROPEAN PATENT SPECIFICATION

(11) **EP 1 761 743 B1**
(45) Date of publication and mention of the grant of the patent: **19.03.2014**
(21) Application number: 05748313.3
(22) Date of filing: 16.06.2005
(51) Int. Cl.: G01D 5/14, G01D 5/245

(54) **ARRANGEMENT COMPRISING A MAGNETIC FIELD SENSOR**
ANORDNUNG MIT EINEM MAGNETFELDSENSOR
ENSEMBLE COMPORTANT UN CAPTEUR DE CHAMP MAGNETIQUE

(30) Priority: 25.06.2004 EP 04102955
(43) Date of publication of application: 14.03.2007
(73) Proprietor: NXP B.V., 5656 AG Eindhoven (NL)
(72) Inventor: Hinz, Michael, c/o Philips I P & Standards GmbH, 52066 Aachen (DE)
(74) Representative: Schwarzweller, Thomas
(86) International application number: PCT/IB2005/051989
(87) International publication number: WO 2006/000963

(56) References cited:
- US-A- 5 386 642
- US-A1- 2002 171 418
- US-A1- 2004 012 386
- US-B1- 6 246 233
- HAUSER H., ET AL: "Preparation, Properties, and Applications of Thin Ferromagnetic Films (Magnetoresistive Sensors)" [Online] 16 June 2000 (2000-06-16), , PAGES 15-27 , XP002347449 Retrieved from the Internet: URL:http://www.iemw.tuwien.ac.at/publicati on/workshop0600/Hauser.pdf> [retrieved on 2005-09-29] the whole document

## Description

The invention relates to an arrangement comprising a magnetic field sensor which is effectively connected to a magnetic encoder which is arranged such that it can move with respect to the sensor and comprises magnetic poles with alternating polarity, wherein the sensor consists of at least two half-bridges which are in each case formed by two magnetoelectric elements, the electrical properties of which depend on the magnetic field strength.

Arrangements comprising magnetic field sensors are used for a wide range of purposes, in particular in rotary magnetic encoders for measuring rotational speeds, for detecting the direction of rotation and for measuring the angular position, and in linear magnetic encoders for measuring position and speed. The encoder has an alternatingly magnetized layer. During the relative movement of the encoder, the sensor generates periodic, for example sinusoidal, output signals which without any further measures in each case have a signal period over an angle of 360°. This corresponds to a North/South pole pair of the magnetic layer and thus to a pole pitch λ (=360°).

Such a sensor is described for example in US 6,246,233 B1, wherein measures are taken to increase the resolution (pulses per pole pitch of the encoder). In this document, four magnetoresistive resistors are arranged at a spacing of three-eighths of the pole pitch, in each case forming a half-bridge, the output signals of which are phase-shifted. By forming square-wave signals and carrying out logical linking, pulses having double said frequency are then produced. In the known arrangement, however, it is also possible for more than two half-bridges to be used. On account of the predefined spacing, the known sensor arrangement is quite large, and this leads to considerable costs particularly in the case of mass production using integrated technologies.

US 2002/0171418 A1 describes an arrangement for determining a position by means of a sensor with at least two half-bridges and by means of a magnetic encoder with alternating poles. When the encoder moves a sinusoidal magnetic field runs through the sensor such that each of the half-bridges provides a voltage output of sinusoidal shape and which are approximately phase shifted by 160° to each other

It is an object of the invention to reduce the dimensions of the mechanical components while retaining as high a resolution of the sensor arrangement as possible.

This object is achieved by the arrangement according to the invention in that the elements of each half-bridge have resistance/field strength characteristics which run in opposite directions and are arranged such that they are in phase with respect to the magnetic field, and in that the spacing between the half-bridges corresponds to part of the pole pitch of the magnetic encoder.

Preferably, in the arrangement according to the invention, it is provided that the spacing between the half-bridges corresponds to one quarter of the pole pitch of the magnetic encoder. However, it is also possible that the spacing between the half-bridges is not equal to one quarter of the pole pitch of the magnetic encoder, and that at least one of the output signals of the half-bridges is subjected to phase correction.

When using two half-bridges, by virtue of the invention only a spacing of the two half-bridges of part of the pole pitch is required for a suitably small size of the sensor, whereas the known arrangement in this case is more than one pole pitch long.

Magnetoelectric elements with resistance/field strength characteristics which run in opposite directions can be obtained. Preferably, in the invention it is provided that the magnetoelectric elements are magnetoresistive elements with barber poles, wherein the orientation of the barber poles is opposed in such a way that the resistance/field strength characteristics are opposed, in particular in such a way that the orientation of the barber poles is offset by 90° with respect to one another.

Magnetoresistive elements with barber poles are commercially available and are described for example in Philips "Data Handbook SC17 2001, Semiconductor Sensors", pages 33, 39.

A simple multiplication of the frequency of the output signals of the at least two half-bridges is obtained in one advantageous embodiment in that the output signals of the at least two half-bridges are converted into binary signals, and in that the binary signals are logically linked. This may preferably take place using an exclusive-OR gate.

According to another advantageous embodiment, another possibility for increasing the resolution is possible in that the output signals of the at least two half-bridges are converted into a signal which changes linearly with the movement of the encoder by applying an inverse trigonometric function.

The invention will be further described with reference to examples of embodiments shown in the drawings to which, however, the invention is not restricted.
Fig. 1 shows two half-bridges consisting of magnetoresistive resistors, which are arranged at a spacing of 1/4.
Fig. 2 shows the sensor with two half-bridges in side view.
Fig. 3 shows the curve of the output signals of the half-bridges shown in Fig. 1.
Fig. 4 shows the curve of output pulses of the arrangement shown in Fig. 1.
Fig. 5 shows one example of a different way of generating output pulses.
Fig. 6 shows one example of a sensor with four half-bridges.
Fig. 7 shows the same sensor and its cooperation with a magnetic encoder.
Fig. 8 shows the output signals of the sensor shown in Figs. 6 and 7.
Fig. 9 shows a sensor with x half-bridges which are arranged at a spacing other than λ/4.
Fig. 10 shows the same sensor cooperating with a magnetic encoder.
Fig. 11 shows the output signals of the encoder shown in Figs. 9 and 10.
Fig. 12 shows one application example of a magnetoresistive sensor for position measurement on a linear encoder.
Fig. 13 shows one application example for measuring rotational speeds at the circumference of a rotary encoder.
Fig. 14 shows one application example for measuring rotational speeds at the end face of a rotary encoder.

### Description of preferred embodiments

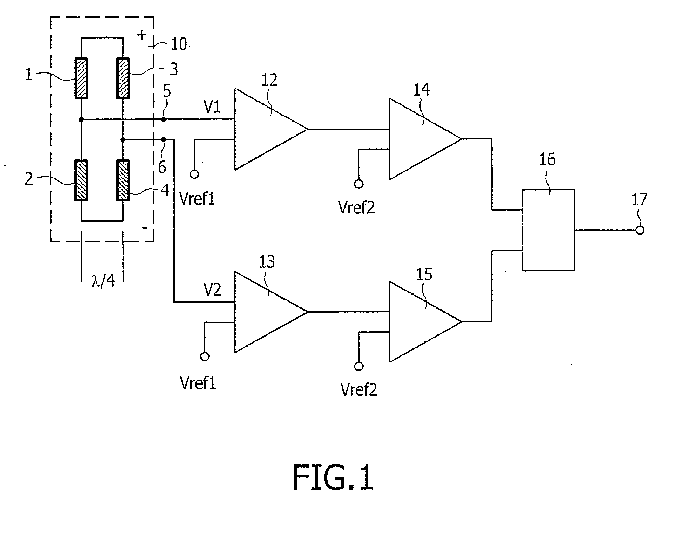

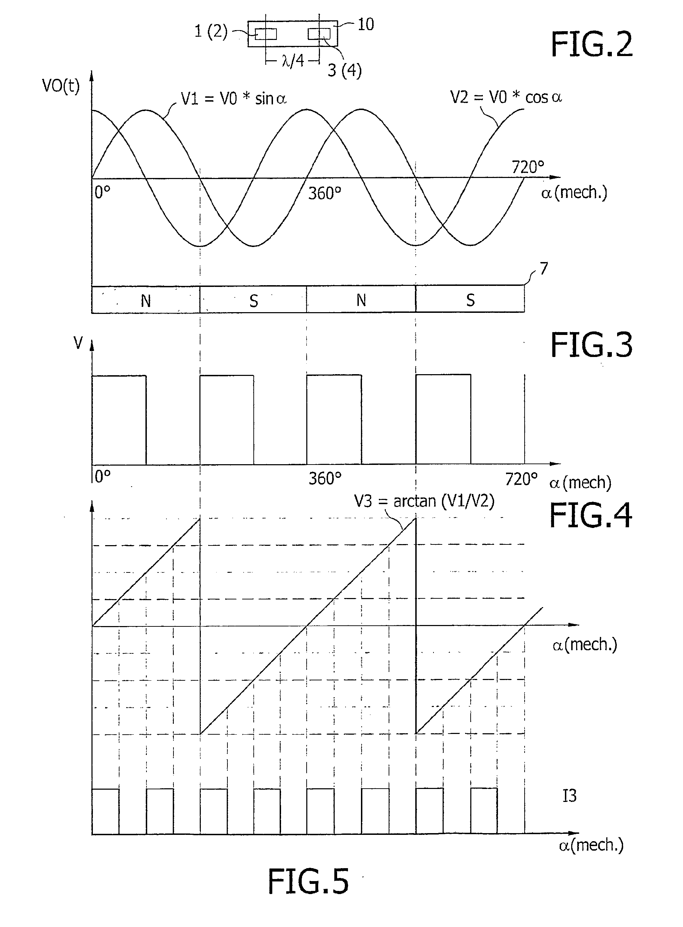

Fig. 1 shows two half-bridges with magnetoresisitve resistors 1, 2, 3, 4, wherein the resistors of each of the half-bridges 1, 2; 3, 4 are provided with barber poles of different orientation, as shown in Figs. 1 and 2 by the different direction of the hatching. The outputs 5, 6 of the half-bridges carry voltages V1 and V2, respectively, which are sinusoidal and are phase-shifted by a quarter of the pole pitch of the encoder 7 shown in part in Fig. 3.

The output signals V1 and V2 of the half-bridges are each fed to an amplifier 12, 13 where they are compared with a reference voltage Vref1. The difference passes in each case to a comparator 14, 15 where it is converted into binary signals by comparison with a further reference voltage Vref2. These binary signals are linked to one another at 16, so that the signal Vout is produced at an output 17, which signal Vout is shown in Fig. 4 and has a wavelength that is half the size of the pole pitch λ. Fig. 2 shows the sensor with two half-bridges in side view.

Fig. 5 shows another possibility for deriving square-wave pulses from the sinusoidal voltages, wherein the square-wave pulses have a higher frequency than those shown in Fig. 4. For this purpose, a voltage V3 = arctan(V1/V2) which changes linearly with the angle α is derived from V1 and V2, for example using a Cordic algorithm. The pulse signal I3 shown in Fig. 5 is then produced by means of a number of comparators or analog/digital converters, wherein in the example shown in Fig. 5 the number of pulses over a pole pitch can be increased by a factor of 2 compared to Fig. 4. The number of pulses is thus determined by the number of resolution steps of the comparator unit.

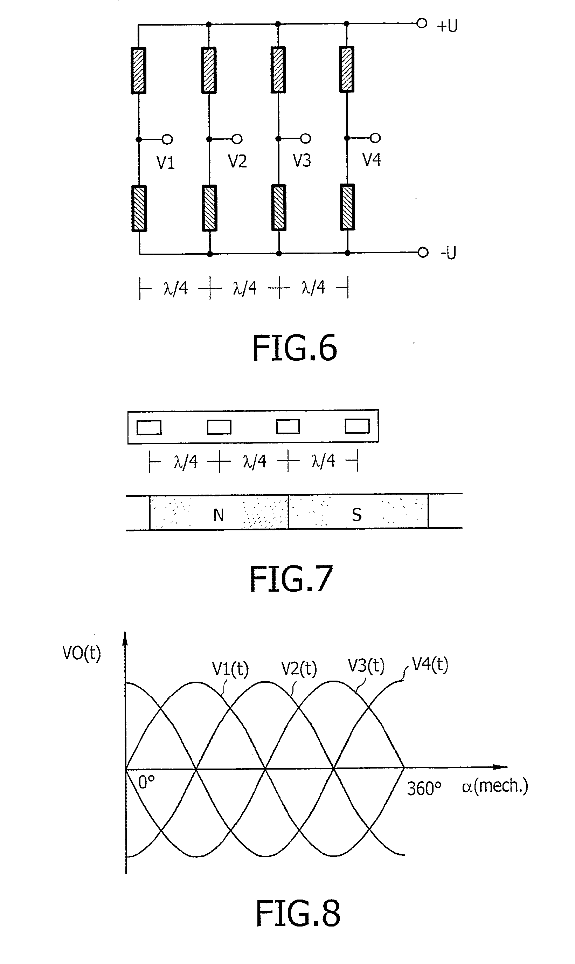

Fig. 6 shows a sensor with four half-bridges which are each arranged at a spacing of λ/4, and its cooperation with a magnetic encoder is shown in Fig. 7. The output signals are shown in Fig. 8 and may advantageously be linked to form a digital signal with a high angular resolution.

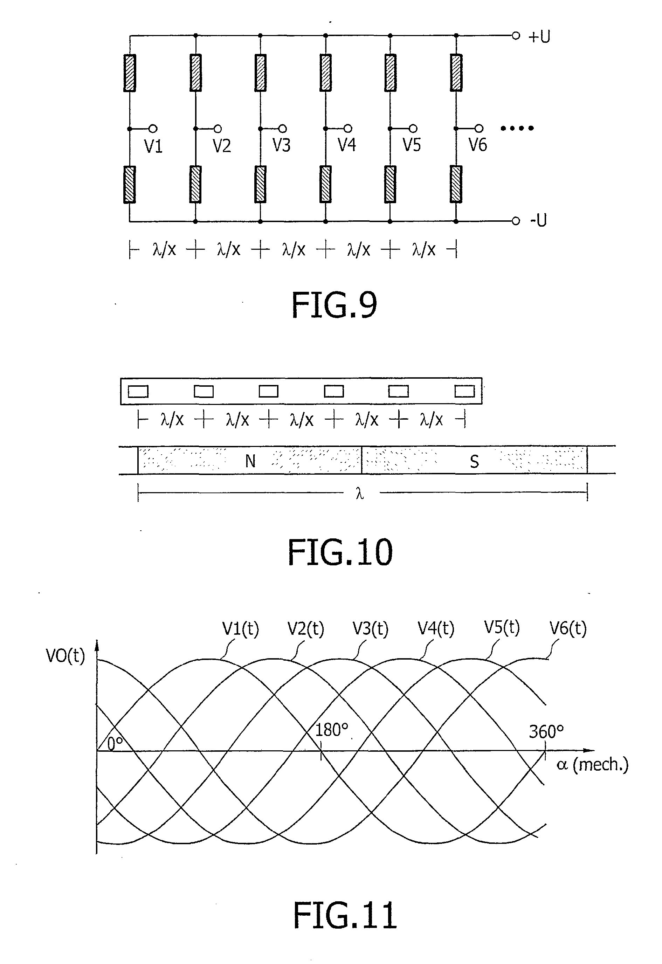

The invention is not restricted to spacings of λ/4 of the individual half-bridges of the sensors. Other spacings x may also be selected, as shown for a sensor with x half-bridges in Figs. 9 and 10. On account of the phase shift other than λ/4 in the output signals shown in Fig. 11, evaluation thereof requires further measures in order to form a digital signal which represents an integer multiple of the pole pitch. Such measures include for example sum and difference formation.

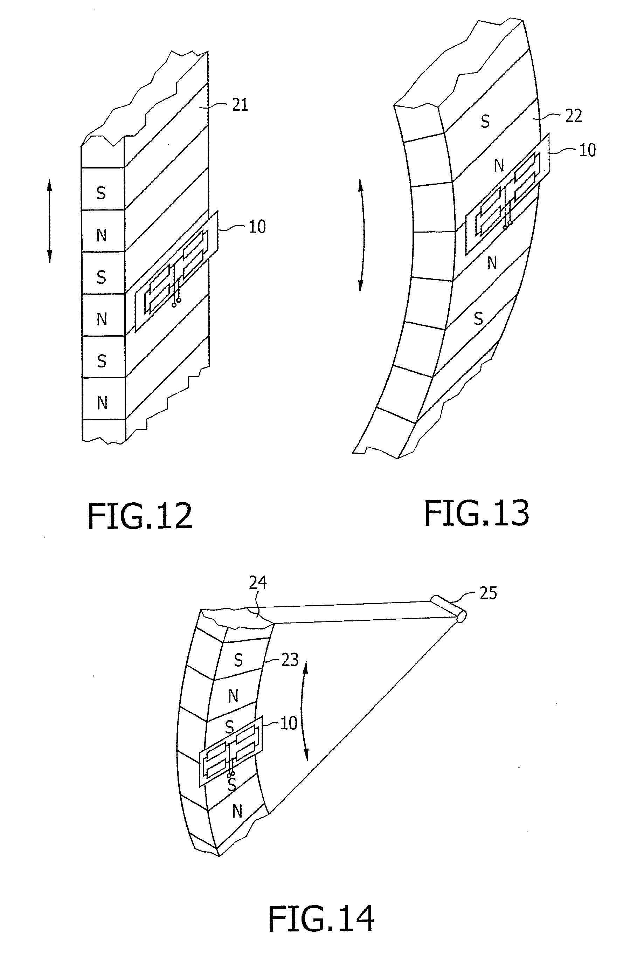

Fig. 12 shows a sensor 10 which lies opposite a linear magnetic encoder 21 which can move in the direction of the arrow.

Fig. 13 shows the same sensor at the circumference of a rotary encoder 22. The output voltages of the half-bridges V1 and V2 are evaluated in the same way as in the example of embodiment shown in Fig. 1 - as is the case also in the example of embodiment shown in Fig. 14 which shows a sensor 10 at the end face 23 of a rotary magnetic encoder 24.

## Claims

1. An arrangement comprising
a magnetic field sensor (10) which is effectively connected to a magnetic encoder (7, 21, 22, 2) which is arranged such that it can move with respect to the sensor (10) and comprises magnetic poles with alternating poles,
wherein the sensor (10) consists of at least two-half bridges which are in each case formed by two magnetoelectric elements (1, 2; 3, 4),
wherein the resistors of each of the half-bridges are provided with barber poles; the electrical properties of which depend on the magnetic field strength,
**characterized**
**in that** the orientation of the barber poles is opposed in such a way that the magnetoelectric elements (1, 2; 3, 4) of each half-bridge have resistance/filed strength characteristics which run in opposite directions and are arranged such that they are in phase with respect to the magnetic fields, and
**in that** the spacing between the half-bridges corresponds to part of the pole of the magnetic encoder (7, 21, 22, 24), and
**in that** the voltage output signals (V1) and (V2) of the half-bridges are sinusoidal and phase shifted by a quarter of the pole pitch of the magnetic encoder (7).

2. An arrangement as claimed in Claim 1, **characterized in that** the spacing between the half-bridges corresponds to one quarter of the pole pitch of the magnetic encoder (7, 21, 22, 24).

3. An arrangement as claimed in Claim 2, **characterized in that** the spacing between the half-bridges is not equal to one quarter of the pole pitch of the magnetic encoder, and **in that** at least one of the output signals of the half-bridges is subject to a phase correction.

4. An arrangement as claimed in any of the Claims 1 to 3, **characterized in that** the orientation of the barber poles is offset by 90° with respect to each other.

5. An arrangement as claimed in any of the Claims 1 to 4, **characterized in that** the output signals of te at least two half-bridges (1, 2; 3, 4) are converted into a binary signals, and **in that** the binary signals are logically linked.

6. An arrangement as claimed in any of the claims 1 to 4, **characterized in that** the output signals of te at least two half-bridges (1, 2; 3, 4) are converted into a signal which changes linearly with the movement of the encoder (7, 21, 22, 24) by applying an inverse trigonometric function.

## Patentansprüche

1. Eine Anordnung aufweisend
einen Magnetfeld Sensor (10), welcher effektiv mit einem magnetischen Kodierer (7, 21, 22, 2) verbunden ist, welcher so angeordnet ist, dass er sich in Bezug auf den Sensor (10) bewegen kann und magnetische Pole mit abwechselnden Polen aufweist,
wobei der Sensor (10) aus zumindest zwei Halbbrücken besteht, welche in jedem Fall mittels zwei magnetoelektrischen Elementen (1, 2; 3, 4) gebildet sind,
wobei die Widerstände von jeder der Halbbrücken mit Barberpolen bereitgestellt sind; die elektrischen Eigenschaften von diesen sind von der Magnetfeldstärke abhängig,
**dadurch gekennzeichnet,**
**dass** die Orientierung der Barberpole derart entgegengesetzt ist, dass die magnetoelektrischen Elemente (1, 2; 3, 4) von jeder Halbbrücke Widerstand/Feldstärke Charakteristika haben, welche in entgegengesetzte Richtungen laufen und so angeordnet sind, dass sie in Phase in Bezug auf das Magnetfeld sind, und
**dass** der Abstand zwischen den Halbbrücken mit einem Teil des Pols des magnetischen Kodierers (7, 21, 22, 24) korrespondiert, und
**dass** die Spannungs-Ausgangssignale (V1) und (V2) der Halbbrücken sinusförmig und phasenverschoben sind um ein Viertel der Polteilung des magnetischen Kodierers (7).

2. Eine Anordnung gemäß Anspruch 1, **dadurch gekennzeichnet, dass** der Abstand zwischen den Halbbrücken korrespondiert mit einem Viertel der Polteilung des magnetischen Kodierers (7, 21, 22, 24).

3. Eine Anordnung gemäß Anspruch 2, **dadurch gekennzeichnet, dass** der Abstand zwischen den Halbbrücken nicht gleich ist zu einem Viertel der Polteilung des magnetischen Kodierers, und dass zumindest eines der Ausgangssignale der Halbbrücken einer Phasenkorrektur unterliegt.

4. Eine Anordnung gemäß irgendeinem der Ansprüche 1 bis 3, **dadurch gekennzeichnet, dass** die Orientierung der Barberpole um 90° in Bezug aufeinander verschoben ist.

5. Eine Anordnung gemäß irgendeinem der Ansprüche 1 bis 4, **dadurch gekennzeichnet, dass** die Ausgangssignale der zumindest zwei Halbbrücken (1, 2; 3, 4) in binäre Signale konvertiert werden, und dass die binären Signale logisch verknüpft sind.

6. Eine Anordnung gemäß irgendeinem der Ansprüche 1 bis 4, **dadurch gekennzeichnet, dass** die Ausgangssignale der zumindest zwei Halbbrücken (1, 2; 3, 4) in ein Signal konvertiert werden, welches sich linear mit der Bewegung des Kodierers (7, 21, 22, 24) ändert, mittels Anwenden einer inversen trigonometrischen Funktion.

## Revendications

1. Agencement, comprenant :
un capteur de champ magnétique (10) effectivement relié à un codeur magnétique (7, 21, 22, 2) qui est agencé mobile par rapport au capteur (10) et comprend des pôles magnétiques de polarité alternée,
lequel capteur (10) se compose d'au moins deux demi-ponts formés chacun de deux éléments magnétoélectriques (1, 2 ; 3, 4),
les résistances de chacun desquels demi-ponts sont dotées d'éléments zébrés du type barber pole dont les propriétés électriques dépendent de l'intensité de champ magnétique,
**caractérisé en ce que**
l'orientation des éléments zébrés du type barber pole est opposée de sorte que les éléments magnétoélectriques (1, 2 ; 3, 4) de chaque demi-pont présentent des caractéristiques résistance/intensité de champ suivant des directions opposées et sont agencés de manière à être en phase avec les champs magnétiques, et
l'espacement entre les demi-ponts correspond à une fraction du pas polaire du codeur magnétique (7, 21, 22, 24), et
les signaux de sortie de tension (V1) et (V2) des demi-ponts sont sinusoïdaux et déphasés d'un quart du pas polaire du codeur magnétique (7).

2. Agencement selon la revendication 1, **caractérisé en ce que** l'espacement entre les demi-ponts correspond à un quart du pas polaire du codeur magnétique (7, 21, 22, 24).

3. Agencement selon la revendication 2, **caractérisé en ce que** l'espacement entre les demi-ponts n'est pas égal à un quart du pas polaire du codeur magnétique et **en ce qu'**au moins un des signaux de sortie des demi-ponts fait l'objet d'une correction de phase.

4. Agencement selon l'une quelconque des revendications 1 à 3, **caractérisé en ce que** les éléments zébrés du type barber pole sont orientés à 90° les uns par rapport aux autres.

5. Agencement selon l'une quelconque des revendications 1 à 4, **caractérisé en ce que** les signaux de sortie desdits au moins deux demi-ponts (1, 2 ; 3, 4) sont convertis en signaux binaires et **en ce que** les signaux binaires sont liés logiquement.

6. Agencement selon l'une quelconque des revendications 1 à 4, **caractérisé en ce que** les signaux de sortie desdits au moins deux demi-ponts (1, 2 ; 3, 4) sont convertis en un signal qui varie linéairement en fonction du mouvement du codeur (7, 21, 22, 24) par application d'une fonction trigonométrique inverse.
